# EUROPÄISCHE PATENTANMELDUNG

(11) **EP 4 733 619 A1**
(43) Veröffentlichungstag der Anmeldung: **29.04.2026**
(21) Anmeldenummer: 24209098.3
(22) Anmeldetag: 28.10.2024
(51) Int. Cl.: F16F 1/373, F16F 15/08, B25D 17/24, F16F 3/087

(54) **DÄMPFUNGSANORDNUNG FÜR PRELLSCHLÄGE BEI EINEM MIT EINEM SCHLAGWERK AUSGESTATTETEN ELEKTROHANDWERKZEUG**

(71) Anmelder: Hilti Aktiengesellschaft, 9494 Schaan (LI)
(72) Erfinder: Hartmann, Markus, 87665 Mauerstetten (DE); Mandel, Ulrich, 86807 Buchloe Honsolgen (DE); Mucha, Steffen, 87742 Dirlewang (DE); Geiger, Steffen, 80687 München (DE); Steingruber, Adrian, 86830 Schwabmünchen (DE); Wiedner, Aaron, 86899 Landsberg (DE); Fünfer, Josef, 86343 Koenigsbrunn (DE)
(74) Vertreter: Hilti Aktiengesellschaft Corporate Intellectual Property

(57) **Zusammenfassung**

Die Erfindung betrifft eine Dämpfungsanordnung für Prellschläge bei einem mit einem Schlagwerk (10) ausgestatteten Elektrohandwerkzeug, umfassend einen gehäuseseitigen Axialanschlag (11; 11a, 11b) sowie einen seitens eines relativ hierzu axial bewegbaren Bauteils ausgebildeten Gegenanschlag (12; 12a, 12b), wobei zwischen dem Axialanschlag (11; 11a, 11b) und dem Gegenanschlag (12; 12a, 12b) mindestens ein aus einem Elastomermaterial bestehender Dämpfungsring (13; 13`; 13") angeordnet ist, welcher mit einer nicht-rotationssymmetrischen Form ausgebildet ist, wobei der Dämpfungsring (13; 13`; 13") entlang des gesamten Umfangs eine im Wesentlichen gleichbleibende Querschnittsfläche (A_{R}) aufweist, die entlang einer zumindest in Axialrichtung (X) gewellten Umfangslinie (U_{L}) verläuft, so dass eine bilineare Federsteifigkeit erzeugbar ist.

## Beschreibung

Die vorliegende Erfindung betrifft eine Dämpfungsanordnung für Prellschläge bei einem mit einem Schlagwerk ausgestatteten Elektrohandwerkzeug, umfassend einen gehäuseseitigen Axialanschlag sowie einen seitens eines relativ hierzu axial bewegbaren Bauteils ausgebildeten Gegenanschlag, wobei zwischen dem gehäuseseitigen Axialanschlag und dem Gegenanschlag mindestens ein aus einem Elastomermaterial bestehender Dämpfungsring angeordnet ist, welcher mit einer nicht-rotationssymmetrischen Form ausgebildet ist.

Das Einsatzgebiet der Erfindung erstreckt sich vornehmlich auf Elektrohandwerkzeuge, wie Bohrhämmer oder Meißelhämmer, welche mit einem Schlagwerk ausgestattet sind, um das Werkzeug - ein Schlagbohrer beziehungsweise Meißel - rückwärtig mit Schlagimpulsen zu beaufschlagen. Hierfür sind möglichst hohe Kraftimpulse wünschenswert; gegenüber dem Werkzeuggehäuse sowie auch zur Schonung angrenzender Bauteile, die nicht Bestandteil des Kraftflusses sind, sind diese Kraftimpulse jedoch abzudämpfen.

Gebräuchliche elektropneumatische Schlagwerke weisen für die Schlagerzeugung sehr dynamisch bewegte Massen auf, wie beispielsweise einen Erregerkolben, einen Schlagkolben, einen sogenannten Döpper, aber auch Führungsrohre oder Werkzeugaufnahmen. Die Bewegung dieser Massen muss innerhalb vorgegebener Bauraumgrenzen bleiben, wodurch benachbarte Bauteile zwangsläufig aneinander anschlagen. Dies führt zu hohen Beschleunigungen, welche die Lebensdauer der Bauteile, aber auch das Gerätehandling negativ beeinflussen. Deshalb werden solche Anschlagstellen gewöhnlich mit hier interessierenden Dämpfungsmitteln versehen, welche den Aufprall abdämpfen, wodurch die Kraftspitzen und Beschleunigungen stark reduziert werden.

### Stand der Technik

Aus dem allgemein bekannten Stand der Technik gehen derartige Dämpfungsmittel in Form von elastomeren Dämpfungsringen hervor, die eine rotationssymmetrische Form aufweisen. Dies führt zu einer entlang des gesamten Umfangs gleichbleibenden Querschnittsfläche, die als kreisrunder, ovaler oder rechteckiger Querschnitt ausgebildet sein kann.

Zwar lassen sich derartig rotationssymmetrische Dämpfungsringe einfach fertigen und erweisen sich wegen der homogenen Geometrie als sehr robust bei Wechselbeanspruchung; andererseits weisen solche Dämpfungsringe in ihrem Arbeitsbereich eine relativ hohe und lineare Federsteifigkeit auf.

Für den erfindungsgegenständlichen Anwendungsfall ist jedoch neben einer reinen Prellschlagdämpfung auch eine Vibrationsreduzierung erwünscht, wofür eine relativ geringe Federsteifigkeit erforderlich wäre. Nur für sehr hohe Kräfte, die beispielsweise bei einer Fehlanwendung mit einer außergewöhnlich hohen Anpresskraft oder einen durch Prellschlag verursachenden Leerschlag, ist eine hohe Federsteifigkeit erwünscht, um derart hohe Belastungen aufzunehmen, ohne das Elastomerbauteil zu überlasten.

Aus der EP 3 683 021 A1 geht eine gattungsgemäße Dämpfungsanordnung mit einem aus einem Elastomermaterial bestehenden Dämpfungsring hervor, der sowohl eine geringe als auch eine hohe Federsteifigkeit bereitstellt. Der elastomere Dämpfungsring besteht hinsichtlich seiner Grundform aus einem Ring mit Rechteckquerschnitt, an dem beidseits stirnseitig axial hervorstehende Materialanformungen vorgesehen sind, die sich kranzartig mit Freischnitten abwechseln. Zur Integration in das Schlagwerk sind zusätzlich angrenzende Bauteile wie ein Anschlagring zum Döpper vorgesehen. Der Dämpfungsring fällt recht voluminös aus, was einen entsprechend hohen Bauraumbedarf erfordert.

Aus der EP 3 335 838 A1 geht ein für eine gattungsgemäße Dämpfungsanordnung vorgesehener elastomerer Dämpfungsring hervor, der demgegenüber kompakter ausfällt. Hierfür ist der Dämpfungsring aus mehreren in Umfangsrichtung aneinandergereihten elastischen Perlen ausgebildet. Dadurch lässt sich eine anfängliche geringe Federsteifigkeit realisieren. Eine Erhöhung der Belastung führt zu einem fortschreitenden Zusammendrücken des Dämpfungsrings, welcher der Belastung formbedingt eine entsprechend erhöhte Federsteifigkeit entgegensetzt. Die Übergangsbereiche benachbarter Perlen bilden jedoch Einschnürungen, welche sich infolge einer Wechselbeanspruchung als Schwachstellen erweisen können.

Es ist daher die Aufgabe der vorliegenden Erfindung, eine gattungsgemäße Dämpfungsanordnung mit einem aus einem Elastomermaterial bestehenden Dämpfungsring dahingehend erweitert zu verbessern, dass ein elastomerer Dämpfungsring mit bi-linearer Federsteifigkeit in fertigungstechnisch einfacher Weise sowie in anwendungsbezogen robuster Ausführung realisiert wird.

### Offenbarung der Erfindung

Die Aufgabe wird ausgehend von einer Dämpfungsanordnung gemäß dem Oberbegriff von Anspruch 1 in Verbindung mit dessen kennzeichnenden Merkmalen gelöst. Hinsichtlich eines eine solche Dämpfungsanordnung aufweisenden Elektrohandwerkzeugs wird auf Anspruch 9 verwiesen. Die jeweils rückbezogenen abhängigen Ansprüche geben vorteilhafte Weiterbildungen der Erwiderung wieder.

Die Erfindung schließt die technische Lehre ein, dass ein nicht-rotationssymmetrischer elastomerer Dämpfungsring entlang des gesamten Umfangs eine im Wesentlichen gleichbleibende Querschnittsfläche A_{R} aufweist, die entlang einer zumindest in Axialrichtung X gewellten Umfangslinie U_{L} verläuft, um eine bi-lineare Federsteifigkeit zu erzeugen.

Der Vorteil der erfindungsgemäßen Lösung liegt darin, dass im Sinne einer bi-linearen Federsteifigkeit bei anfänglichen Belastungen eine geringe Federsteifigkeit zur Reduzierung von Vibrationen bereitgestellt wird und daneben auch hohe Belastungen, die beispielsweise durch Fehlanwendungen wie Sturz oder eine extreme hohe Anpresskraft infolge von Prellschlägen auftreten können, eine hohe Federsteifigkeit bereitgestellt wird, um Beschädigungen zu vermeiden. Hierfür ist die Bauform des erfindungsgemäßen Dämpfungsrings so gestaltet, dass sich die Verformungsrichtung des Elastomers in Abhängigkeit der Belastungshöhe verändert. Bei anfänglich geringen Belastungen erfolgt eine Dehnung des Dämpfungsrings in vornehmlich Umfangsrichtung, da dieser bestrebt ist, die in Axialrichtung einwirkende Belastung durch Glättung der gewellten Umfangslinie U_{L} auszugleichen. Nachdem der Dämpfungsring seine in Axialrichtung gerichtete Welligkeit durch Abplattung ausgenutzt hat, erfolgt infolge weiter ansteigender Belastungen eine Dehnung des Dämpfungsrings vor allem in Axialrichtung X. In dieser Phase der bi-linearen Federsteifigkeit wirkt nicht mehr die Form des Dämpfungsrings, sondern dessen materialbedingte Federwirkung kommt zur Geltung. Hierdurch können in Summe sowohl Vibrationen reduziert werden als auch Prellschläge kompensiert werden. Dank der entlang des gesamten Umfangs im Wesentlichen gleichbleibenden Querschnittsfläche A_{R} erweist sich der Dämpfungsring als äußerst robust bei Wechselbeanspruchung.

Gemäß einer bevorzugten Ausführungsform des Dämpfungsrings ist dessen in Axialrichtung X gewellte Umfangslinie U_{L} sinusförmig gewellt. Hierdurch lässt sich bei axialer Beanspruchung in der anfänglichen Belastungsphase eine weitestgehend lineare Federkennlinie realisieren. Die Anzahl der Sinusperioden entlang des Umfangskreises kann hier vorzugsweise zwischen drei bis sechs betragen. Während die Minimalanzahl an Sinusperioden eine besonders geringe Federsteifigkeit bewirkt, kann mit der Maximalanzahl an Sinusperioden eine höhere Federsteifigkeit umgesetzt werden. Die Anzahl der über den Umfangskreis realisierbaren Sinusperioden hängt natürlich auch vom Durchmesser des Dämpfungsrings ab. Die Minimalanzahl gewährleistet unabhängig davon jedoch eine stabile beidseitige Dreipunktauflage. Mit steigendem Durchmesser können zwar auch mehr als sechs Sinusperioden entlang des Umfangskreises vorgesehen werden, bei dem vorliegend interessierenden Anwendungsfall einer Schlagwerksdämpfung erweist sich angesichts der gängigen Durchmesserverhältnisse der hierfür zum Einsatz kommenden Bauteile eine Maximalanzahl von sechs als Grenzwert dafür, dass eine wirksame Vibrationsdämpfung realisiert wird.

Für eine wirksame Vibrationsdämpfung für eine anfänglich geringe Belastung des Dämpfungsrings erweist sich für den vorliegenden Anwendungsfall eine Höhe H des Dämpfungsrings von 1,5- bis 2-fach der Länge L des Querschnitts als ein optimaler Maßbereich für eine wirksame Vibrationsdämpfung im Hinblick auf eine Kompensation der hierbei auftretenden Schwingungsamplituden.

Vorzugsweise weist der Dämpfungsring einen rechteckförmigen Hüllquerschnitt mit abgerundeten Eckbereichen auf, was hinsichtlich des Axialkontakts im unbelasteten Zustand eine linienförmige Anlagefläche gestattet, die gegenüber einer nur punktförmigen Anlagefläche eines kreisförmigen Hüllquerschnitts zur Linearität der Federkennlinie beiträgt. Die abgerundeten Eckbereiche können auch mit sehr geringem Radius ausgeführt werden und sind vornehmlich urformtechnisch bedingt.

Gemäß einer weiteren die Erfindung verbessernden Maßnahme wird vorgeschlagen, mehrere gleichartige Dämpfungsringe in Reihe anzuordnen, um eine möglichst geringe Federsteifigkeit zu realisieren. Im Gegensatz zu einem einteiligen Elastomerdämpfer wird über diese mehrteilige Lösung mit vergleichbarem Bauraum und gleicher Shore-Härte des Elastomermaterials eine minimale Steifigkeit bei maximaler Materialauslastung erzielt.

Ein für die erfindungsgegenständliche Anwendung geeigneter Dämpfungsring besteht vorzugsweise aus einem Elastomermaterial, das ausgewählt ist aus einer Materialgruppe, umfassend: Styrol-Butadien-Kautschuk (SBR), Nitrilkautschuk bzw. Acrylnitril-Butadien-Kautschuk (NBR), Chloroprenkautschuk (CR), Fluor-Polymer-Kautschuk (FKM), Butadien-Kautschuk (BR), Ethylen-Propylen-Dien Kautschuk (EPDM), Hydrierter Acrylnitrilbutadien-Kautschuk (HNBR) oder dergleichen.

Der vorstehend beschriebene erfindungsgemäße Dämpfungsring kann im Zusammenhang mit elektropneumatischen Schlagwerken zum Einsatz kommen, bei denen der gehäuseseitige Axialanschlag vorzugsweise sowohl am Werkzeuggehäuse des Elektrohandwerkzeugs gegenüber dem Schlagwerk als auch innerhalb eines Döppergehäuses des Schlagwerks gegenüber dem Döpper angeordnet ist. An beiden Stellen des Elektrohandwerkzeugs gilt es, Kraftspitzen und Beschleunigungen bewegter Massen zu dämpfen, welche einerseits durch das Schlagwerk selbst gegenüber dem Werkzeuggehäuse auftreten und andererseits durch den im Schlagwerk integrierten Döpper gegenüber des diesen umgebenden Gehäuseteils, das eine Fortführung des Führungsrohres darstellt.

### Detailbeschreibung anhand Zeichnung

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Fig. 1: eine schematische Längsansicht eines in einem Elektrohandwerkzeug integrierten Schlagwerks mit einer Dämpfungsanordnung für Prellschläge,
- Fig. 2a bis 2c: verschiedene perspektivische Ansichten eines erfindungsgemäß ausgebildeten Dämpfungsrings mit bi-linearer Federsteifigkeit,
- Fig. 3a bis 3b: eine Veranschaulichung des Verhaltens des Dämpfungsrings unter anfänglich geringer Belastung,
- Fig. 4a bis 4b: eine Veranschaulichung des Verhaltens des Dämpfungsrings unter hoher Belastung,
- Fig. 5a bis 5d: mehrere Ausführungsformen von Dämpfungsringen mit einer unterschiedlichen Anzahl von Sinusperioden entlang des Umfangskreises, und
- Fig. 6: eine Mehrfachanordnung des erfindungsgemäßen Dämpfungsrings in Reihenschaltung.

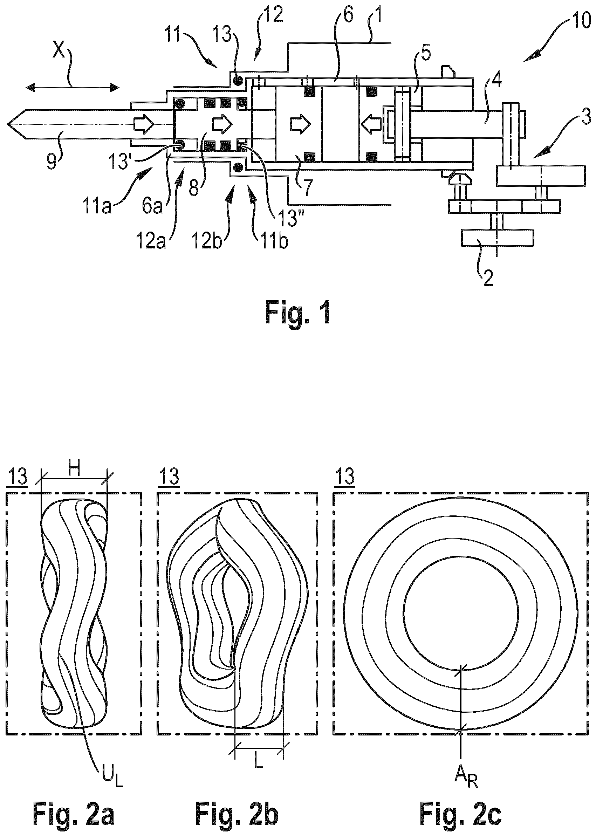

Gemäß Fig. 1 umfasst ein - hier nicht im Einzelnen dargestelltes - Elektrohandwerkzeug in Form eines Meißelhammers einen innerhalb eines Werkzeuggehäuses 1 integrierten elektrischen Antriebsmotors 2, dessen rotatorische Antriebsbewegung über ein Exzentergetriebe 3 mit hieran angekoppeltem Pleuel 4 in eine linear alternierende Bewegung eines Erregerkolbens 5 umgesetzt wird. Der Erregerkolben 5 ist als Bestandteil einer Kolben-Zylinder-Einheit innerhalb eines Führungsrohrs 6 geführt und wirkt in an sich bekannter Weise mit einem ebenfalls gegenüberliegend im Führungsrohr 6 geführten Schlagkolben 7 zusammen. Der Schlagkolben 7 wirkt wiederum auf einen Döpper 8 ein, welcher den hierdurch erzeugten Schlagimpuls schließlich an ein Werkzeug 9 weitergibt. Der Döpper 8 ist in einem eigenen Führungsrohrteil 6a geführt.

Das im Wesentlichen aus den Bauteilen Pleuel 4, Erregerkolben 5, Führungsrohr 6, Schlagkolben 7 und Döpper 8 bestehende Schlagwerk 10 des Elektrohandwerkzeugs kommt an einem am Gehäuse 1 des Elektrohandwerkzeugs ausgebildeten Axialanschlag 11 zur Anlage. Gegenüber dem insoweit ortsfesten Axialanschlag 11 bildet das Führungsrohr 6 des Schlagwerks 10 ein relativ hierzu axial bewegbares Bauteil mit einem korrespondierenden Gegenanschlag 12. Im Bereich des Döppers 8 bildet das Führungsrohrteil 6a einen beidseits gehäuseseitigen Axialanschlag 11a und 11b, wobei korrespondierende Absätze am Döpper 8 den Gegenanschlag 12a beziehungsweise 12b bilden.

Zwischen dem jeweiligen Axialanschlag 11, 11a und 11b und dem je korrespondierenden Gegenanschlag 12, 12a und 12b ist ein aus einem Elastomermaterial bestehender Dämpfungsring 13, 13`, 13" angeordnet.

Die Fig. 2a bis 2c umfassen verschiedene Blickrichtungen einer perspektivischen Darstellung desselben exemplarischen Dämpfungsrings 13 zur Veranschaulichung der Geometrie. Der Dämpfungsring 13 besitzt entlang des Umfangskreises vier Sinusperioden einer gewellten Umfangslinie U_{L}. Ersichtlicherweise ist der Dämpfungsring 13 mit einer entlang des gesamten Umfangs im Wesentlichen gleichbleibender Querschnittsfläche A_{R} realisiert. Die Höhe H des Dämpfungsrings beträgt hier ca. das 1,5-fache der Länge L des Querschnitts.

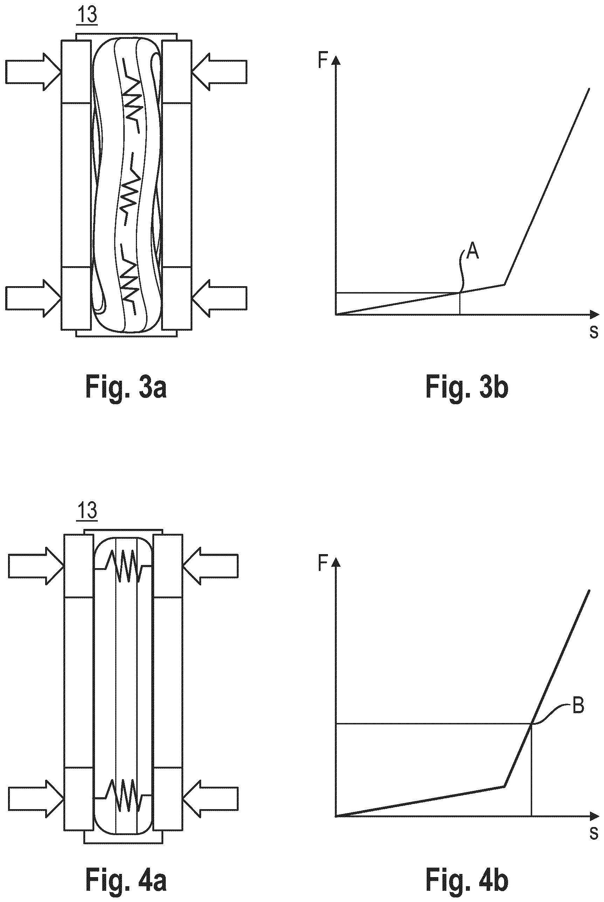

Gemäß der in Fig. 3a und 3b veranschaulichten Belastungssituation erfolgt infolge einer anfänglich geringen Belastung nach Fig. 3a ein fortschreitendes Abplatten des exemplarischen Dichtungsrings 13. In dieser Phase dehnt sich der Dämpfungsring 13 vornehmlich in Umfangsrichtung. Dies führt gemäß Fig. 3b zu einer geringen Federsteifigkeit in der entsprechenden Belastungssituation A, wie der flache Abschnitt der Federkennlinie verdeutlicht.

Nachdem gemäß Fig. 4a mit weiter ansteigender Belastung der exemplarische Dämpfungsring 13 vollständig abgeplattet ist, führt eine weiter fortschreitende Belastung zu einer Dehnung in vornehmlich axialer Richtung. Diese nicht mehr formbedingte, sondern allein materialbedingte Dehnung ist in dieser Belastungssituation B mit einer höheren Federsteifigkeit verbunden, die sich am steilen Abschnitt der Federkennlinie ablesen lässt.

Insgesamt ist mit dem erfindungsgemäß ausgebildeten Dämpfungsring also eine bi-lineare Federsteifigkeit verbunden.

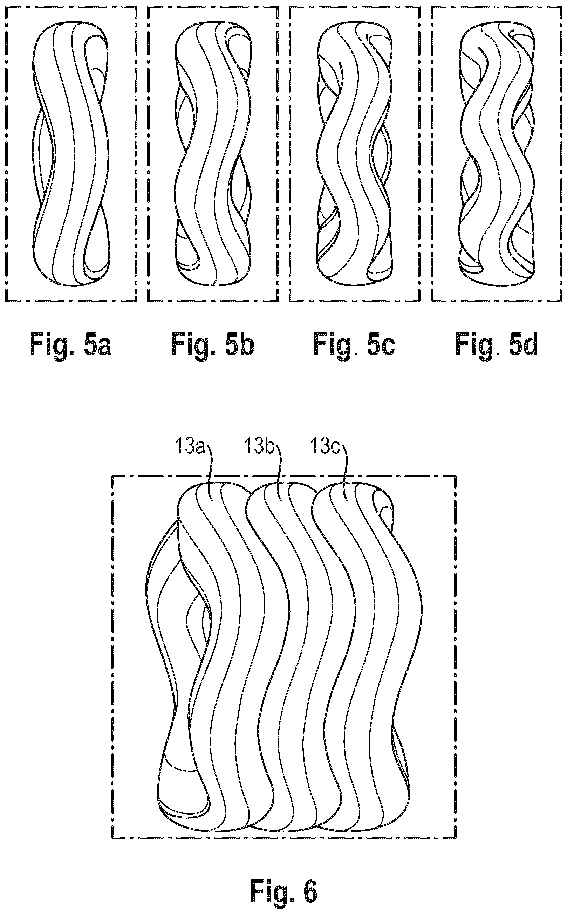

Gemäß den Fig. 5a bis 5d kann die anfängliche Federsteifigkeit des exemplarischen Dämpfungsrings 13 auch durch die Anzahl der Sinusperioden der gewellten Umfangslinie U_{L} eingestellt werden. Gemäß Fig. 5a sind drei Sinusperioden realisiert, gemäß Fig. 5b sind vier Sinusperioden realisiert, gemäß Fig. 5c sind fünf Sinusperioden realisiert und gemäß Fig. 5d sind sechs Sinusperioden realisiert.

Zur weiteren Erhöhung der Federsteifigkeit, insbesondere im Bereich der materialbedingten Federwirkung, ist gemäß Fig. 6 eine Mehrfachanordnung von Dämpfungsringen 13a bis 13c realisiert, die in Reihe geschaltet sind, wobei dieselbe Wellenform der Dämpfungsringe 13a bis 13c ein formschlüssiges Ineinandergreifen gestattet.

Die Erfindung ist nicht beschränkt auf die vorstehend beschriebenen Ausführungsbeispiele. Es sind vielmehr auch Abwandlungen hiervon denkbar, welche vom Schutzbereich der nachfolgenden Ansprüche mit umfasst sind. So ist es beispielsweise auch möglich, den Dämpfungsring mit einer anderen Querschnittsform, beispielsweise mit einem Kreisquerschnitt, auszubilden.

### Bezugszeichenliste

- 1: Werkzeuggehäuse
- 2: Antriebsmotor
- 3: Exzentergetriebe
- 4: Pleuel
- 5: Erregerkolben
- 6: Führungsrohr
- 7: Schlagkolben
- 8: Döpper
- 9: Werkzeug
- 10: Schlagwerk
- 11: gehäuseseitiger Axialanschlag
- 12: Gegenanschlag
- 13: Dämpfungsring

- X: Axialrichtung
- A_{R}: Querschnittsfläche
- U_{L}: Umfangslinie
- H: Höhe
- L: Länge

## Patentansprüche

1. Dämpfungsanordnung für Prellschläge bei einem mit einem Schlagwerk (10) ausgestatteten Elektrohandwerkzeug, umfassend einen gehäuseseitigen Axialanschlag (11; 11a, 11b) sowie einen seitens eines relativ hierzu axial bewegbaren Bauteils ausgebildeten Gegenanschlag (12; 12a, 12b), wobei zwischen dem Axialanschlag (11; 11a, 11b) und dem Gegenanschlag (12; 12a, 12b) mindestens ein aus einem Elastomermaterial bestehender Dämpfungsring (13; 13`; 13") angeordnet ist, welcher mit einer nicht-rotationssymmetrischen Form ausgebildet ist,
**dadurch gekennzeichnet, dass** der Dämpfungsring (13; 13`; 13") entlang des gesamten Umfangs eine im Wesentlichen gleichbleibende Querschnittsfläche (A_{R}) aufweist, die entlang einer zumindest in Axialrichtung (X) gewellten Umfangslinie (U_{L}) verläuft, so dass eine bi-lineare Federsteifigkeit erzeugbar ist.

2. Dämpfungsanordnung nach Anspruch 1,
**dadurch gekennzeichnet, dass** die gewellte Umfangslinie (U_{L}) sinusförmig gewellt ist.

3. Dämpfungsanordnung nach Anspruch 2,
**dadurch gekennzeichnet, dass** die Anzahl der Sinusperioden entlang des Umfangskreises zwischen 3 bis 6 beträgt.

4. Dämpfungsanordnung nach einem der vorstehenden Ansprüche,
**dadurch gekennzeichnet, dass** die Höhe (H) des Dämpfungsrings (13; 13`; 13") das 1,5 bis 2-fache der Länge (L) des Querschnitts beträgt.

5. Dämpfungsanordnung nach einem der vorstehenden Ansprüche,
**dadurch gekennzeichnet, dass** der Dämpfungsring (13; 13`; 13") einen rechteckförmigen Hüllquerschnitt mit abgerundeten Eckbereichen aufweist.

6. Dämpfungsanordnung nach einem der vorstehenden Ansprüche,
**dadurch gekennzeichnet, dass** mehrere gleichartige Dämpfungsringe (13a, 13b, 13c) in Reihe angeordnet sind.

7. Dämpfungsanordnung nach einem der vorstehenden Ansprüche,
**dadurch gekennzeichnet, dass** der Dämpfungsring (13; 13`; 13") durch das Elastomermaterial in Verbindung mit der Geometrie seine Verformungsrichtung in Abhängigkeit der Belastungshöhe derart ändert, dass eine anfängliche Belastung eine Dehnung in vorwiegend Umfangsrichtung hervorruft, woran sich bei erhöhter Belastung eine Dehnung in vorwiegend Axialrichtung anschließt.

8. Dämpfungsanordnung nach einem der vorstehenden Ansprüche,
**dadurch gekennzeichnet, dass** der Dämpfungsring (13; 13`; 13") aus einem Elastomermaterial besteht, das ausgewählt ist aus einer Materialgruppe, umfassend: Styrol-Butadien-Kautschuk (SBR), Nitrilkautschuk bzw. Acrylnitril-Butadien-Kautschuk (NBR), Chloroprenkautschuk (CR), Fluor-Polymer-Kautschuk (FKM), Butadien-Kautschuk (BR), Ethylen-Propylen-Dien Kautschuk (EPDM), Hydrierter Acrylnitrilbutadien-Kautschuk (HNBR).

9. Elektrohandwerkzeug, insbesondere Meißelhammer, mit einem elektropneumatischen Schlagwerk (10), das mit einer Dämpfungsanordnung für Prellschläge gemäß einem der vorstehenden Ansprüche ausgestattet ist.

10. Elektrohandwerkzeug nach Anspruch 9,
**dadurch gekennzeichnet, dass** der gehäuseseitige Axialanschlag (11; 11 a, 11b) in einem Werkzeuggehäuse (1) des Elektrohandwerkzeugs gegenüber dem Schlagwerk (10) und/oder in einem Führungsrohrteil (6a) des Schlagwerks (10) gegenüber einem Döpper (8) angeordnet ist.
